(19) **Europäisches Patentamt / European Patent Office / Office européen des brevets**

(11) **EP 3 374 228 B1**

(12) **FASCICULE DE BREVET EUROPEEN**

(45) Date de publication et mention de la délivrance du brevet:
**18.12.2019 Bulletin 2019/51**

(21) Numéro de dépôt: **16798251.1**

(22) Date de dépôt: **24.10.2016**

(51) Int Cl.:
***H02J 50/12*** *(2016.01)*

(86) Numéro de dépôt international:
**PCT/FR2016/052755**

(87) Numéro de publication internationale:
**WO 2017/081382 (18.05.2017 Gazette 2017/20)**

(54) **PROCÉDÉ DE CHARGE SANS CONTACT D'UNE BATTERIE D'UN VÉHICULE AUTOMOBILE EN MOUVEMENT, ET SYSTÈME CORRESPONDANT**

KONTAKTLOSES LADEVERFAHREN FÜR EINE BATTERIE EINES KRAFTFAHRZEUGS IN BEWEGUNG UND ENTSPRECHENDES SYSTEM

CONTACTLESS CHARGING METHOD FOR A BATTERY OF A MOTOR VEHICLE IN MOTION, AND CORRESPONDING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.11.2015 FR 1560694**

(43) Date de publication de la demande:
**19.09.2018 Bulletin 2018/38**

(73) Titulaire: **RENAULT s.a.s.**
**92100 Boulogne-Billancourt (FR)**

(72) Inventeurs:
• **LOUDOT, Serge**
**91190 Villiers Le Bacle (FR)**
• **CAILLIEREZ, Antoine**
**92150 Suresnes (FR)**

(56) Documents cités:
**US-A1- 2012 161 530    US-A1- 2014 015 340**

• **SAICHOL CHUDJUARJEEN ET AL: "An Improved $LLC$ Resonant Inverter for Induction-Heating Applications With Asymmetrical Control", IEEE TRANSACTIONS ON INDUSTRIAL ELECTRONICS, IEEE SERVICE CENTER, PISCATAWAY, NJ, USA, vol. 58, no. 7, 1 juillet 2011 (2011-07-01), pages 2915-2925, XP011355877, ISSN: 0278-0046, DOI: 10.1109/TIE.2010.2070779**

**Description**

L'invention se rapporte aux domaines de l'automobile et de l'électricité. Plus précisément, elle concerne un procédé de charge sans contact d'une batterie d'un véhicule automobile, l'énergie électrique étant transférée par induction entre une bobine primaire disposée au sol et une bobine secondaire embarquée sur le véhicule et connectée à la batterie du véhicule au travers d'un étage de conversion.

Les procédés de charge sans contact permettent de charger un véhicule muni d'au moins une bobine secondaire, reliée à une batterie de traction par un étage de redressement, alors que le véhicule roule sur une route dont le sol est équipé de bobines primaires et de leurs onduleurs associés.

Les solutions actuelles de charge sans contact lorsque le véhicule roule sont basées sur des boucles de très grande longueur, afin d'en simplifier la réalisation et de disposer d'un seul onduleur alimentant une grande longueur de route. Ces dispositifs conviennent particulièrement aux véhicules de grande longueur (par exemple bus, tramway) circulant sur des voies réservées car leur application à des véhicules routiers conventionnels présente l'inconvénient majeur d'imposer une voie dédiée pour la charge. En effet, ils présentent des pertes élevées dues aux grandes longueurs de boucles dont le champ rayonné peut échauffer les parties conductrices du véhicule, combinées aux pertes par effet Joule de la boucle primaire elle-même, et un rayonnement élevé en dehors du véhicule, pouvant présenter des risques pour la santé. Le principe de la petite boucle est donc préféré dans le cadre du développement de la charge sans contact pour les véhicules électriques de tourisme et utilitaires circulant sur des voies non dédiées uniquement à la charge sans contact. Ces contraintes exigent que le circuit primaire du système de charge sans contact puisse cohabiter avec tout type de véhicule routier, y compris ceux qui ne peuvent pas se recharger par induction. Une autre exigence porte sur le rayonnement magnétique qui doit rester circonscrit à un volume défini entre le dessous de caisse du véhicule et le sol afin de satisfaire aux gabarits d'émission de champ magnétique, ainsi que pour éviter d'exposer les parties métalliques du châssis au champ magnétique ce qui détériorerait fortement le rendement de la charge à cause des courants de Foucault induits dans ces parties métalliques. Une dernière exigence est que le système permette aussi bien la charge sans contact en dynamique qu'en statique. Pour répondre à ces exigences, les petites boucles doivent être alimentées uniquement lorsqu'un véhicule doté d'un système de recharge inductif est au-dessus et les boucles doivent être capables d'assurer un couplage dynamique suffisant entre les bobines primaires et secondaires pour garantir un rendement satisfaisant y compris sur autoroute à haute vitesse où les temps de passage, et donc d'alimentation au-dessus d'une boucle, peuvent être réduits jusqu'à environ 20ms.

Si des systèmes de charge sans contact utilisant des petites boucles sont déjà connus, ils ne répondent pas encore aux exigences énoncées précédemment. Ainsi le système Serpentine® identifie avec un capteur de position la boucle primaire au sol située sous le véhicule, ladite boucle primaire est alors connectée via un relais à l'alimentation. Ce système ne fonctionne qu'à faible vitesse, environ 20km/h, et ne présente pas de régulation s'adaptant à la variation de couplage ce qui ne favorise pas le rendement.

De l'état de la technique antérieur, on connaît le document suivant. Le document FR2988234B1 divulgue un procédé de charge sans contact utilisant un moyen numérique de « tracking », le « tracking » se définissant comme la recherche de la fréquence de résonance du circuit afin d'obtenir le meilleur transfert pour une position donnée. L'objectif du « tracking » est de garantir un transfert de puissance optimal par un déphasage nul entre l'intensité et le premier harmonique de la tension dans le circuit primaire. Il est connu de profiter du circuit résonant à fort facteur de qualité du fait de l'absence de pertes fer dans le circuit magnétique du coupleur pour réduire fortement les pertes par commutation des transistors. Pour ce faire, plusieurs alternatives existent, soit un fonctionnement à la fréquence de résonance où l'amorçage et le blocage des transistors se fait à intensité nulle, soit un fonctionnement à une fréquence supérieure à la fréquence de résonance : ZVS pour « Zéro Voltage Switching » avec des pertes au blocage, soit un fonctionnement à une fréquence inférieure à la fréquence de résonance : ZCS pour « Zéro Current Switching » avec des pertes à l'amorçage. Le « tracking » décrit dans ce document comporte notamment une étape de calcul du déphasage, une étape de détermination du signe du déphasage et une étape d'asservissement reposant sur une stratégie incrémentale qui se fait sur plusieurs périodes électriques. Ce moyen de « tracking » est donc incompatible avec la dynamique nécessaire à une charge en roulant où le contrôle du déphasage entre intensité et tension doit être piloté plus rapidement.

Un des buts de l'invention est de remédier à au moins une partie des inconvénients de la technique antérieure en fournissant un procédé de charge sans contact pour les véhicules électriques de tourisme et utilitaires circulant sur des voies non dédiées uniquement à la charge sans contact.

A cette fin, l'invention propose un procédé de transfert de puissance d'un circuit primaire comportant un circuit résonant et un onduleur vers un circuit secondaire, destiné à la charge sans contact d'une batterie d'un véhicule automobile, une puissance électrique étant transférée par induction entre une bobine primaire disposée au sol et une bobine secondaire embarquée sur ledit véhicule et connectée à ladite batterie, ledit procédé comportant des étapes de :

- pilotage de cellules de commutation dudit onduleur du circuit primaire reliant la bobine primaire à un bus d'alimentation continu

- mesure de l'intensité dans la bobine primaire
- filtrage d'un signal de ladite intensité
- mesure du déphasage entre ladite intensité et la tension aux bornes du circuit résonant du circuit primaire
- asservissement en fréquence dudit circuit primaire utilisant le déphasage précédemment mesuré

caractérisé en ce que ledit procédé comporte en outre
une étape d'initialisation de ladite fréquence du circuit primaire, apte à fixer le signe dudit déphasage sur une demi-période prédéterminée du signal de ladite intensité en fonction de ladite fréquence ainsi initialisée.

Grâce à l'invention, le signe du déphasage est connu ce qui permet d'économiser l'étape de détermination dudit signe et d'obtenir ainsi un procédé de transfert d'énergie avec une dynamique d'asservissement plus rapide.

Selon une caractéristique avantageuse, lesdites étapes dudit procédé sont exécutées à chaque période du signal de ladite intensité. Ce pilotage en pleine onde est ultra rapide et adapté à la charge en roulant car la période sur laquelle est rafraichie la consigne de pilotage est imposée par celle dudit circuit résonant.

Selon une autre caractéristique avantageuse, ladite étape de filtrage comprend des étapes de :

- filtrage analogique haute fréquence
- détection du changement de signe du signal filtré.

Ces étapes permettent un filtrage du bruit par des éléments matériels (hardware) et un traitement du signal filtré logiciel utilisant un comparateur à hystérésis logiciel (software). Cette complémentarité économise le nombre de composants matériels et garantit une détection de changement de signe robuste assurée par un signal d'intensité propre.

Selon une autre caractéristique avantageuse, ladite mesure de déphasage est exécutée dans ladite demi-période prédéterminée, ce qui permet de mesurer ledit déphasage dans une fenêtre temporelle pendant laquelle son signe est connu.

Selon une autre caractéristique avantageuse, ladite mesure de déphasage est déclenchée par un changement de signe de l'intensité du circuit primaire dans ladite demi-période prédéterminée. L'avantage de cette caractéristique est de l'ordre applicatif car un changement de signe d'un signal propre est facile à identifier, contrairement à un maximum ou un minimum qui requièrent une identification de changement de pente plus complexe à réaliser.

Selon une autre caractéristique avantageuse, ladite étape de mesure de déphasage est exécutée dans la zone de fonctionnement en mode générateur du circuit primaire, ce qui correspond au mode charge de ladite batterie dudit véhicule.

Selon une autre caractéristique avantageuse, ladite mesure du déphasage est issue de la mesure de la durée entre ledit changement de signe de l'intensité et le prochain front montant de commutation de la tension. L'avantage de cette caractéristique est notamment sa facilité d'implémentation.

Selon une autre caractéristique avantageuse, dans ladite étape d'initialisation on impose une fréquence de commutation des cellules du circuit primaire à une fréquence supérieure à une fréquence de résonance maximale prédéterminée. Cette caractéristique garantit dès l'allumage un fonctionnement avec l'intensité en avance sur la tension, appelé aussi mode ZVS, pour « Zéro Voltage Switching ». L'intérêt du mode ZVS est double, d'une part il est plus facilement réalisable que le strict déphasage nul et d'autre part les pertes au blocage sont très faibles grâce à l'évolution des composants tels que les transistors type MOSFETs ou IGBTs auxquels on adjoint fréquemment une capacité entre drain et source (ou collecteur et émetteur) afin de réduire davantage leurs pertes. En effet, l'autre mode concurrent correspondant à une fréquence de commutation inférieure à la fréquence de résonance est appelé mode ZCS, pour « Zéro Current Switching », et présente des pertes à l'amorçage qui n'ont pas connu la même diminution des pertes car les diodes ont peu évolué.

Selon une autre caractéristique avantageuse, ladite étape d'asservissement en fréquence du circuit primaire comporte une étape de calcul de la prochaine fréquence de commutation des cellules du circuit primaire en fonction dudit déphasage mesuré issu de ladite étape de mesure de déphasage. Cette caractéristique permet un pilotage auto-adaptatif au couplage de la puissance transférée qui varie en fonction de la position du véhicule en mouvement par rapport à la bobine primaire. Avantageusement, cette caractéristique traduit aussi la capacité d'adaptation du procédé à tout type de véhicule, notamment quelle que soit sa garde au sol. De plus, l'asservissement peut résulter d'un calcul en temps discret ou d'un calcul instantané en temps continu utilisant un régulateur intégral.

Selon une autre caractéristique avantageuse, ladite étape de calcul de la prochaine fréquence de commutation des cellules du circuit primaire est la somme de la fréquence courante de commutation des cellules et d'un gain multiplié par le sinus de l'angle dudit déphasage issu de ladite étape de mesure de déphasage. Avantageusement, la non linéarité de la fonction sinus permet un taux de convergence de plus en plus fort avec l'augmentation du déphasage.

Selon une autre caractéristique avantageuse, ledit transfert de puissance est arrêté sur des seuils de fréquence prédéterminés. Cette caractéristique garantit un transfert de puissance optimal au meilleur rendement, quel que soit le véhicule et sa garde au sol. En effet, cette caractéristique permet de fixer une condition d'arrêt du transfert de puissance de la boucle émettrice lorsque la boucle réceptrice embarquée sur le véhicule devient trop éloignée pour assurer un transfert avec un bon rendement (similaire à la charge statique c'est-à-dire d'environ 90%).

Avantageusement, ledit transfert de puissance est arrêté sur des seuils d'intensité prédéterminés. Cette alternative garantit également un transfert de puissance au meilleur rendement sans besoin de calcul de puissance.

L'invention concerne aussi un système de transfert de puissance comportant un circuit primaire, ledit circuit primaire comportant un circuit résonant et un onduleur, ledit système étant apte à transférer une puissance électrique par induction entre une bobine primaire du circuit résonant disposée au sol et une bobine secondaire embarquée sur un véhicule et connectée à une batterie du véhicule, ledit système comprenant :

- des moyens de pilotage de cellules de commutation dudit onduleur du circuit primaire reliant la bobine primaire à un bus d'alimentation continu
- des moyens de mesure de l'intensité dans la bobine primaire
- des moyens de filtrage d'un signal de ladite intensité
- des moyens de mesure du déphasage entre ladite intensité et la tension aux bornes du circuit résonant
- des moyens d'asservissement en fréquence dudit circuit primaire utilisant le déphasage mesuré par lesdits moyens de mesure

caractérisé en ce que ledit système comporte en outre

des moyens d'initialisation de ladite fréquence du circuit primaire aptes à fixer le signe dudit déphasage sur une demi-période prédéterminée du signal de ladite intensité, en fonction de ladite fréquence initialisée par lesdits moyens d'initialisation.

Avantageusement, lesdits moyens dudit système sont activés à chaque période du signal de ladite intensité.

Ledit moyen de filtrage comporte de préférence des moyens de :

- filtrage analogique haute fréquence
- comparaison par hystérésis du signal filtré.

Avantageusement, ledit moyen de mesure de déphasage est activé dans ladite demi-période prédéterminée.

Avantageusement encore, ledit moyen de mesure de déphasage est activé par un moyen de détection du changement de signe de l'intensité du circuit primaire dans ladite demi-période prédéterminée.

De préférence, ledit moyen de mesure de déphasage est activé dans une zone de fonctionnement en mode générateur du circuit primaire.

Avantageusement, ledit moyen de mesure de déphasage utilise un moyen de mesure de la durée entre ledit changement de signe de l'intensité et le prochain front montant de commutation de la tension.

Avantageusement encore, lesdits moyens d'initialisation de la fréquence de commutation des cellules du circuit primaire sont aptes à initialiser ladite fréquence à une fréquence supérieure à une fréquence de résonance maximale prédéterminée.

Avantageusement, ledit moyen d'asservissement en fréquence du circuit primaire comporte un moyen de calcul de la prochaine fréquence de commutation des cellules du circuit primaire dont l'entrée est ledit déphasage issu dudit moyen de mesure de déphasage.

Préférentiellement, ledit moyen de calcul de la prochaine fréquence de commutation des cellules du circuit primaire comporte un moyen de sommation dont les entrées sont la fréquence courante de commutation des cellules et le résultat d'un multiplicateur d'un gain et d'une fonction sinus appliquée à l'angle dudit déphasage issu dudit moyen de mesure de déphasage.

Avantageusement, ledit système comprend un moyen d'arrêt dudit transfert de puissance sur des seuils de fréquence prédéterminés.

Alternativement ledit système comprend un moyen d'arrêt dudit transfert de puissance sur des seuils d'intensité prédéterminés.

Ce système présente des avantages analogues à ceux du procédé selon l'invention.

D'autres caractéristiques et avantages apparaîtront à la lecture d'un mode de réalisation préféré décrit en référence aux figures dans lesquelles:

- la figure 1 est un schéma de principe d'une route électrique à transmission d'énergie par induction conforme à l'invention;
- la figure 2 représente un exemple selon l'invention d'un système de transfert de puissance entre une boucle au sol et un véhicule situé au-dessus ;
- la figure 3 est un organigramme des étapes du procédé selon l'invention ;
- la figure 4 est un chronogramme de la tension aux bornes du circuit résonant du circuit primaire du système, de l'intensité aux bornes du circuit primaire, et des positions de cellules de commutation du système dans un cas de fonctionnement présentant un déphasage positif aux bornes du circuit résonant du circuit primaire du système, selon l'invention ;

- la figure 5 représente l'évolution de modes de fonctionnement dudit système en fonction du déphasage mesuré aux bornes du circuit résonant du circuit primaire ;
- la figure 6 représente la courbe de résonance pour des bobines ;
- et la figure 7 illustre la puissance transférée en fonction du couplage entre ces bobines.

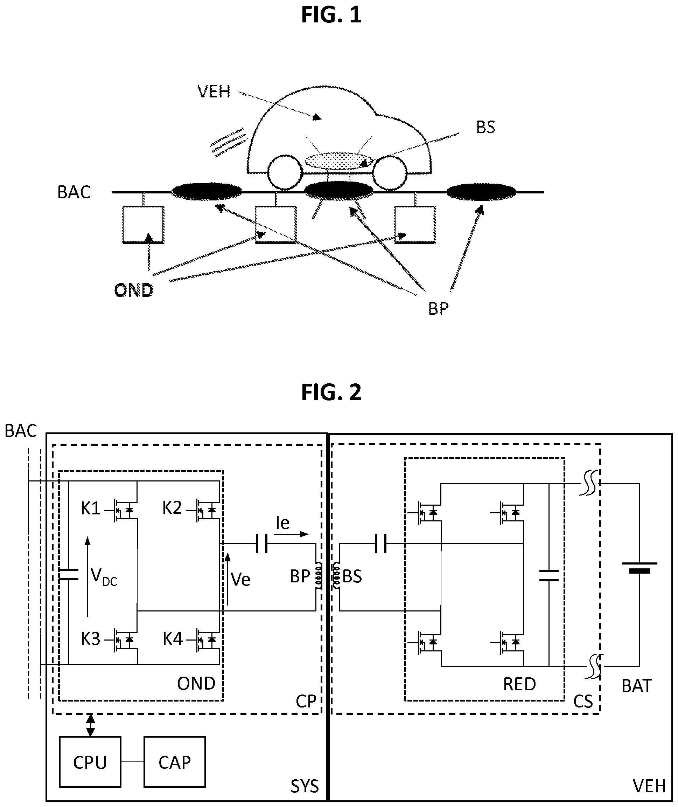

Sur la **figure 1** est représenté un schéma de principe d'une route électrique à transmission d'énergie par induction conforme à l'invention sur lequel sont illustrées des boucles ou bobines primaires BP au sol ainsi que leurs onduleurs OND associés. Les bobines primaires BP sont alimentées par un bus d'alimentation continu BAC intégré au sol. Un véhicule VEH électrique ou hybride en mouvement est situé au-dessus d'une bobine primaire BP et un transfert de puissance entre une bobine primaire BP et une bobine secondaire BS du véhicule VEH connectée à la batterie du véhicule VEH est illustré. En roulage autoroutier, le temps passé par le véhicule au-dessus de la boucle primaire BP (dans la limite d'un décalage de +/-50%) peut être inférieur à 20ms.

Selon un mode préféré de réalisation de l'invention, la **figure 2** illustre le système SYS de transfert de puissance entre une boucle au sol BP et un véhicule VEH situé au-dessus. Le système SYS comporte :

- une unité électronique de pilotage CPU contenant notamment les moyens d'initialisation, de filtrage et de pilotage,
- des capteurs d'intensité CAP, reliés à l'unité CPU
- un circuit primaire CP au sol comportant un onduleur OND et un circuit résonant primaire comportant la bobine primaire BP.

A bord du véhicule VEH se trouvent :

- le circuit secondaire CS comportant un redresseur embarqué RED et un circuit résonant secondaire comportant une bobine secondaire BS
- une batterie de traction BAT à laquelle est relié le circuit secondaire CS.

Le circuit primaire CP est alimenté par un bus d'alimentation continu BAC intégré au sol. La tension $V_{DC}$ est la tension d'alimentation aux bornes de l'onduleur OND. Les cellules de commutation K1, K2, K3 et K4 sont des transistors, type MOSFET ou IGBT dans l'exemple, dont le pilotage détermine la fréquence du circuit primaire CP. Ve est la tension du circuit résonant primaire et le est l'intensité traversant la bobine primaire BP. Dans un autre mode de réalisation il pourrait y avoir une unique unité électronique de pilotage pour plusieurs boucles primaires tel qu'indiqué dans le document FR2998427B1.

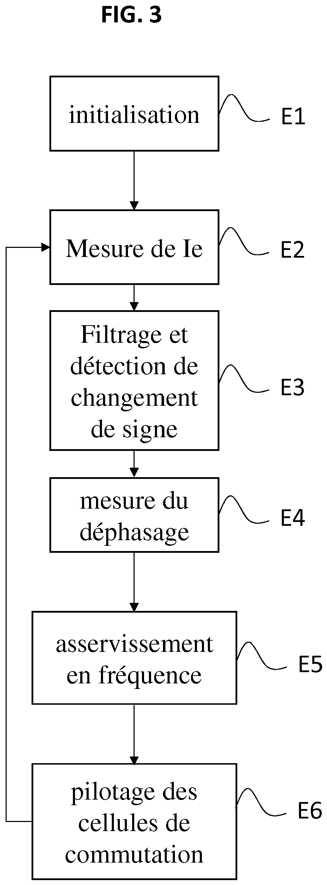

La **figure 3** est un organigramme des étapes du procédé de transfert de puissance selon l'invention explicitant l'enchaînement des étapes :

- E1 : initialisation de ladite fréquence du circuit primaire CP, apte à fixer le signe dudit déphasage sur une demi-période prédéterminée du signal de ladite intensité le dépendant de ladite fréquence ainsi initialisée,
- E2 : mesure de l'intensité le dans la bobine primaire BP,
- E3 : filtrage de ladite intensité Ie,
- E4 : mesure du déphasage entre ladite intensité Ie et la tension aux bornes du circuit résonant primaire Ve,
- E5 : asservissement en fréquence dudit circuit primaire CP utilisant le déphasage précédemment mesuré,
- E6 : pilotage des transistors K1, K2, K3 et K4 dudit onduleur OND du circuit primaire CP reliant la bobine primaire BP à un bus d'alimentation continu BAC,

avec rebouclage sur l'étape E2.

Selon le mode préféré de réalisation de l'invention cet enchaînement des étapes E1 à E6 est réalisé à chaque période du signal de ladite intensité Ie.

L'étape d'initialisation E1 fixe la fréquence initiale de commutation du circuit primaire au démarrage du « tracking », le mode ZVS étant préféré au mode ZCS afin de limiter les pertes. Une fréquence de démarrage élevée est choisie pour assurer une fréquence de fonctionnement supérieure à la fréquence de résonance tout en appartenant à une plage de fréquence définie par des seuils prédéterminés. Dans un mode préféré de réalisation, pour réaliser une transition entre les boucles minimisant la phase transitoire de la régulation lors du démarrage de l'alimentation de la boucle suivante, l'onduleur de la bobine primaire fournit à l'onduleur de la bobine suivante sa fréquence de pilotage avant de s'arrêter. L'étape de mesure E2 est réalisée au moyen de capteurs d'intensité CAP mesurant l'intensité le traversant la bobine primaire BP. Le signal mesuré est une entrée de l'étape de filtrage E3 consistant en un circuit de traitement de signal comportant des étapes de :

- filtrage analogique haute fréquence, typiquement d'une bande passante dix fois supérieure à la fréquence du courant à mesurer, pour retirer le bruit sans ajouter de retard de phase significatif,
- détection du signe de l'intensité du courant, typiquement à l'aide d'un comparateur à hystérésis, dont le basculement déclenche une nouvelle période de calcul de consigne (typiquement par interruption externe de l'unité CPU chargée des tâches E4, E5, et E6).

Une étape additionnelle de filtrage numérique masquant l'interruption durant la phase E4 peut aussi être ajoutée.

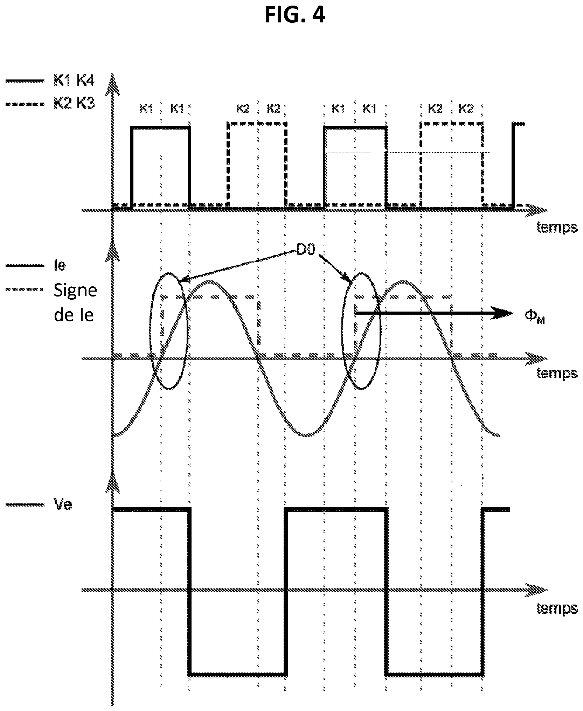

En effet, le filtrage de l'intensité traversant la bobine primaire Ie est essentiel car l'étape ultérieure E4 de mesure du déphasage utilise en entrée ledit signal d'intensité Ie filtré. Ainsi, la mesure de l'angle de déphasage entre la tension et l'intensité du circuit résonant primaire est issue de la mesure de la durée qui sépare le passage par zéro (changement de signe) D0 de ladite intensité Ie filtrée et le prochain front montant de commutation K1 K4 de la tension, représentés dans le chronogramme de la **figure 4.** Ce chronogramme illustre en fonction du temps:

- la position des transistors K1 et K4 en trait plein ainsi que la position des transistors K2 et K3 en traits pointillés,
- l'intensité traversant la bobine primaire Ie filtrée en trait plein ainsi que le signal binaire de changement de signe de ladite intensité en traits pointillés et
- la tension du circuit résonant du circuit primaire Ve.

Etant donnée l'initialisation en mode ZVS générateur (puisqu'il s'agit de charger la batterie BAT du véhicule VEH) le déphasage mesuré est positif : l'intensité traversant la bobine primaire Ie est en avance sur le premier harmonique de la tension du circuit résonant du circuit primaire Ve. Le pilotage des transistors K1, K2, K3 et K4 génère la forme du signal de ladite tension Ve.

Grâce à ladite étape de filtrage E3, la mesure du déphasage entre la tension et l'intensité du circuit résonant primaire est robuste car l'étape de mesure de déphasage E4 s'appuie sur la détection du passage par zéro D0 de l'intensité traversant la bobine primaire Ie. La mesure du déphasage $\varphi$M est directement issue de la mesure de la durée qui sépare le passage par zéro D0 de ladite intensité Ie et le prochain front montant de commutation K1 K4 de la tension. L'onduleur OND est donc cadencé par le système de telle façon que le passage par zéro D0 de ladite intensité Ie génère une interruption qui déclenche ladite étape de mesure dudit déphasage E4 et par conséquence le pilotage des commutations des transistors pour la période à venir.

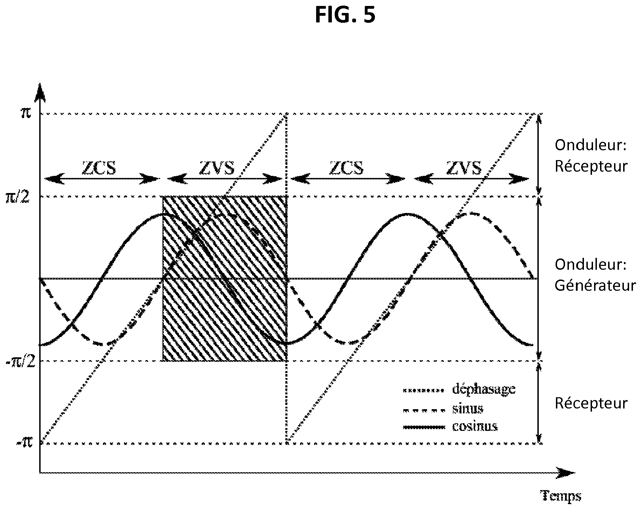

L'étape suivante d'asservissement en fréquence E5 utilise en entrée ledit angle de déphasage issu de l'étape de mesure E4. La **figure 5** présente l'évolution des modes de fonctionnement du système de transfert de puissance en fonction du déphasage mesuré lors de l'étape E4. Le signe du sinus et du cosinus dudit angle de déphasage déterminent le mode de fonctionnement présent: générateur ou récepteur ; ZVS ou ZCS. Et comme il est très difficile en pratique de piloter lesdits transistors de façon à maintenir un déphasage mesuré nul, il est préféré un déphasage proche de zéro légèrement positif, ce qui correspond au mode ZVS, assurant des commutations à zéro de tension et évitant donc le recouvrement inverse des diodes lors des commutations. Le mode préféré de réalisation suivant l'invention est donc le mode ZVS en générateur, illustré par la zone hachurée qui délimite la demi-période pendant laquelle le signal du déphasage est positif. Cette zone correspond aux fréquences supérieures à la fréquence de résonance centrale. Ce choix du mode ZVS justifie qu'à l'étape d'initialisation E1 au démarrage il faille faire commuter l'onduleur OND à une fréquence supérieure à la fréquence de résonance maximale. Ainsi, un fonctionnement en ZVS est garanti, même lors des transitoires, permettant donc un « tracking » dynamique efficace en éliminant l'étape de recherche du signe du déphasage grâce à la fixation d'un mode de fonctionnement. L'étape d'asservissement E5, dont le but est de garantir un fonctionnement au plus proche de la résonance en mode ZVS générateur, dans son mode préféré de réalisation repose sur un moyen simple qui est de rechercher une valeur nulle du sinus dudit angle de déphasage. La commande en fréquence à appliquer par l'onduleur OND est alors directement corrigée par la valeur du sinus d'un pas de calcul à l'autre :

$$\text{Fréquence}_{n+1} = \text{Fréquence}_n + K*\sin(\text{angle de déphasage})$$

où K est un coefficient déterminé en fonction de la gamme de fréquence utilisée et de la dynamique de régulation souhaitée. Néanmoins, cet exemple simple de calcul de fréquence de ladite étape d'asservissement E5 n'est pas unique, on pourrait également utiliser un régulateur intégral en fonction dudit déphasage. Les variations de charge et de position de véhicule VEH sont suffisamment lentes face à la dynamique de régulation quasi instantanée pour conserver un déphasage nul lors de ces variations.

Si le but de l'asservissement est de se maintenir au plus proche de la résonance en mode ZVS générateur, c'est aussi à la condition de ne pas sortir d'une plage définie par des seuils prédéterminés. Ainsi, si la fréquence obtenue à l'issue de ladite étape d'asservissement E6 est en dehors de ladite plage le transfert de puissance est arrêté. En effet, la dernière difficulté majeure dans l'usage de petites boucles est de pouvoir charger un véhicule VEH en roulant avec un bon rendement sans avoir à dégrader sa vitesse. Or, la puissance transférée est dépendante de plusieurs facteurs :

- la fréquence de commutation des transistors K1, K2, K3 et K4,
- le déphasage entre l'intensité traversant la bobine primaire Ie et la tension du circuit résonant primaire Ve,
- l'alignement des bobines émettrice BP et réceptrice BS, qui se traduit par le couplage magnétique entre ces bobines.

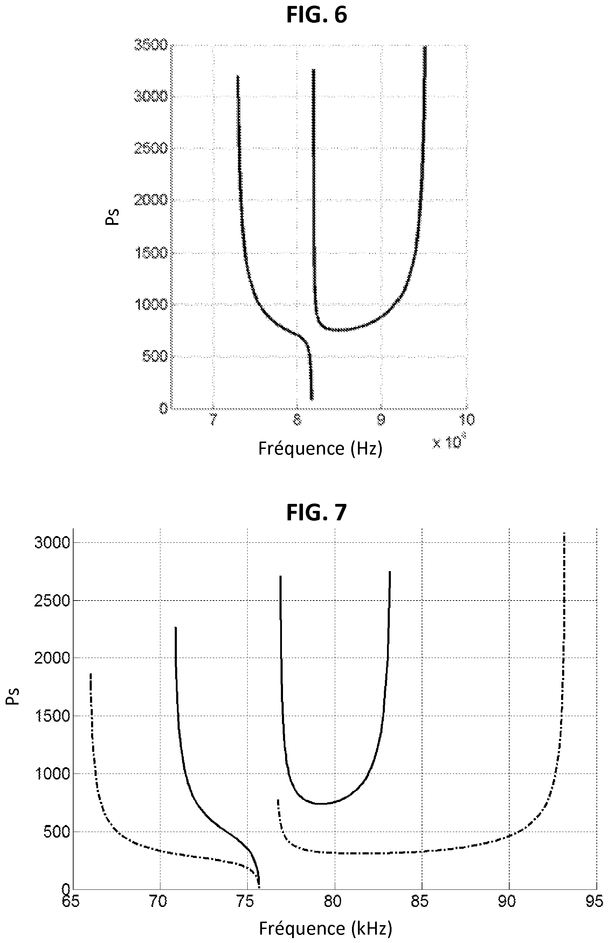

La courbe de résonance (intensité et tension sont à déphasage nul) pour une position alignée des bobines primaire BP et secondaire BS (meilleur couplage) de la **figure 6** illustrent ainsi la puissance transférée Ps en Watt en fonction de la fréquence de commutation des transistors K1, K2, K3 et K4 dans le cas de bobines de 40 à 50cm (standard compatible avec la charge statique) et de gardes au sol de 10 à 15cm. Dans cet exemple la fréquence de résonance est d'environ 85kHz (approprié aussi à la charge statique car la norme en statique converge vers une fréquence à 85kHz), et les seuils de fréquence prédéterminés limitant la plage de fréquence garantissant un rendement minimum étant définis par des marges de part et d'autre de la fréquence centrale de résonance correspondent ici à 80 et 100kHz. Si la sortie du régulateur dépasse lesdits seuils de fréquence, cela peut signifier deux choses :

- il n'y a pas de bobine réceptrice : dans ce cas, le déphasage sera proche de 90°. Ces deux conditions constituent un critère d'arrêt du transfert de puissance ;
- la puissance consommée par la charge est très faible : dans ce cas, le déphasage sera légèrement inférieur à 90° et la condition d'arrêt, pour être prise en compte doit être calibrée à une valeur légèrement inférieure à 90°.

Pour illustrer aussi l'influence du couplage sur la puissance transférée Ps, la **figure 7** compare une courbe de résonance à couplage maximum en traits pointillés et une courbe de résonance à couplage diminué de moitié en trait plein. En effet, lorsque les bobines sont décalées, c'est-à-dire que le couplage entre les bobines diminue, la courbe de résonance associée se décale. De même, en cas de véhicule VEH avec une garde au sol supérieure à la valeur de référence (10 à 15cm) utilisée dans le mode préféré de réalisation de l'invention le couplage sera plus mauvais mais permettra néanmoins le transfert de puissance Ps dans une plage plus restreinte de position relative des bobines primaire et secondaire.

De plus, comme il peut exister plusieurs fréquences de résonance, ces seuils de fréquence prédéterminés définissant une plage de fréquence de pilotage des transistors K1, K2, K3 et K4 sont nécessaires pour la régulation et doivent appartenir à la plage de fonctionnement de l'onduleur OND.

Alternativement, lesdits seuils d'arrêt du transfert de puissance peuvent être des seuils d'intensité traversant la bobine primaire Ie prédéterminés, en considérant par exemple un seuil correspondant à 20% de l'intensité maximale de ladite intensité Ie. Ces seuils d'intensité ou de puissance minimum transférables sont calibrés en fonction des caractéristiques du circuit résonant de façon à ce que leur dépassement constitue un critère d'arrêt du transfert de puissance permettant de garantir un rendement minimum.

Pour être en permanence au plus proche de la résonance malgré un couplage qui varie en roulant, l'étape d'asservissement E5 du procédé adapte la fréquence d'alimentation de la boucle primaire BP en fonction de cette variation de position relative d'une boucle par rapport à l'autre et garantit un rendement minimum en arrêtant le transfert de puissance dès que la fréquence calculée dépasse les seuils déterminés de fréquence.

Enfin, la dernière étape de pilotage des transistors E6 utilise en entrée la fréquence calculée dans l'étape précédente E5 pour l'appliquer à la tension du circuit résonant Ve par le pilotage des transistors K1, K2, K3 et K4.

Le procédé et le système de transfert de puissance de l'invention garantissent donc un pilotage ZVS en pleine onde, c'est-à-dire que la fréquence du courant de sortie conditionne la fréquence de commutation des transistors K1, K2, K3 et K4 sur la période suivante, avec une convergence rapide sur la fréquence de résonance satisfaisant ainsi non seulement aux besoins de la charge sans contact statique mais aussi aux exigences de la charge sans contact en dynamique d'un véhicule VEH roulant à vitesse usuelle sur des voies non dédiées. En outre, ledit procédé s'applique à la charge d'une batterie de servitude également.

## Revendications

1. Procédé de transfert de puissance d'un circuit primaire (CP) comportant un circuit résonant et un onduleur (OND) vers un circuit secondaire (CS), destiné à la charge sans contact d'une batterie (BAT) d'un véhicule automobile (VEH), une puissance électrique étant transférée par induction entre une bobine primaire (BP) disposée au sol et une bobine secondaire (BS) embarquée sur ledit véhicule (VEH) et connectée à ladite batterie (BAT), ledit procédé comportant des étapes de :

- (E6) pilotage des cellules de commutation (K1, K2, K3 et K4) dudit onduleur (OND) du circuit primaire (CP) reliant la bobine primaire (BP) à un bus d'alimentation continu (BAC)
- (E2) mesure de l'intensité dans la bobine primaire (Ie)
- (E3) filtrage d'un signal de ladite intensité (Ie)
- (E4) mesure du déphasage ($\varphi$M) entre ladite intensité (Ie) et la tension aux bornes du circuit résonant du circuit primaire (Ve)
- (E5) asservissement en fréquence dudit circuit primaire (CP) utilisant le déphasage précédemment mesuré ($\varphi$M)

**caractérisé en ce que** ledit procédé comporte en outre
une étape d'initialisation (E1) de ladite fréquence du circuit primaire (CP), apte à fixer le signe dudit déphasage ($\varphi$M) sur une demi-période prédéterminée du signal de ladite intensité (Ie), en fonction de ladite fréquence ainsi initialisée,
et **en ce que** lesdites étapes dudit procédé sont exécutées à chaque période du signal de ladite intensité (Ie).

2. Procédé selon la revendication précédente, **caractérisé en ce que** ladite étape de filtrage (E3) comprend des étapes de :

- filtrage analogique haute fréquence
- détection du changement de signe du signal filtré.

3. Procédé selon l'une quelconque des revendications précédentes **caractérisé en ce que** ladite mesure de déphasage ($\varphi$M) est exécutée dans ladite demi-période prédéterminée.

4. Procédé selon l'une quelconque des revendications précédentes **caractérisé en ce que** ladite mesure de déphasage ($\varphi$M) est déclenchée par un changement de signe (D0) de l'intensité (Ie) du circuit primaire (CP) dans ladite demi-période prédéterminée.

5. Procédé selon l'une quelconque des revendications précédentes **caractérisé en ce que** ladite étape de mesure de déphasage (E4) est exécutée dans la zone de fonctionnement en mode générateur du circuit primaire (CP).

6. Procédé selon l'une quelconque des revendications précédentes **caractérisé en ce que** ladite mesure du déphasage ($\varphi$M) est issue de la mesure de la durée entre ledit changement de signe (D0) de l'intensité (Ie) et le prochain front montant de commutation de la tension.

7. Procédé selon l'une quelconque des revendications précédentes **caractérisé en ce que** dans ladite étape d'initialisation (E1) on impose une fréquence de commutation des cellules du circuit primaire (K1, K2, K3 et K4) à une fréquence supérieure à une fréquence de résonance maximale prédéterminée.

8. Procédé selon l'une quelconque des revendications précédentes **caractérisé en ce que** ladite étape d'asservissement en fréquence (E5) du circuit primaire (CP) comporte une étape de calcul de la prochaine fréquence de commutation des cellules du circuit primaire (K1, K2, K3 et K4) en fonction dudit déphasage mesuré ($\varphi$M) issu de ladite étape de mesure de déphasage (E4).

9. Procédé selon la revendication précédente **caractérisé en ce que** ladite étape de calcul de la prochaine fréquence de commutation des cellules du circuit primaire (K1, K2, K3 et K4) est la somme de la fréquence courante de commutation des cellules et d'un gain multiplié par le sinus de l'angle dudit déphasage issu de ladite étape de mesure de déphasage (E4).

10. Procédé selon l'une quelconque des revendications précédentes **caractérisé en ce que** ledit transfert de puissance est arrêté sur des seuils de fréquence prédéterminés.

11. Procédé selon l'une quelconque des revendications 1 à 9 **caractérisé en ce que** ledit transfert de puissance est arrêté sur des seuils d'intensité prédéterminés.

**12.** Système de transfert de puissance comportant un circuit primaire (CP), ledit circuit primaire (CP) comportant un circuit résonant et un onduleur (OND), ledit système étant apte à transférer une puissance électrique par induction entre une bobine primaire (BP) du circuit résonant disposée au sol et une bobine secondaire (BS) embarquée sur un véhicule (VEH) et connectée à une batterie (BAT) du véhicule (VEH), ledit système comprenant :

- des moyens de pilotage de cellules de commutation (K1, K2, K3 et K4) dudit onduleur (OND) du circuit primaire (CP) reliant la bobine primaire (BP) à un bus d'alimentation continu (BAC)
- des moyens de mesure de l'intensité dans la bobine primaire (Ie)
- des moyens de filtrage d'un signal de ladite intensité (Ie)
- des moyens de mesure du déphasage ($\varphi$M) entre ladite intensité (Ie) et la tension aux bornes du circuit résonant (Ve)
- des moyens d'asservissement en fréquence dudit circuit primaire (CP) utilisant le déphasage mesuré ($\varphi$M) par lesdits moyens de mesure **caractérisé en ce que** ledit système comporte en outre

des moyens d'initialisation de ladite fréquence du circuit primaire (CP) aptes à fixer le signe dudit déphasage ($\varphi$M) sur une demi-période prédéterminée du signal de ladite intensité (Ie), en fonction de ladite fréquence initialisée par lesdits moyens d'initialisation,
et **en ce que** lesdits moyens dudit système sont activés à chaque période du signal de ladite intensité (Ie).

**13.** Système selon la revendication précédente, **caractérisé en ce que** ledit moyen de filtrage comporte des moyens de :

- filtrage analogique haute fréquence
- comparaison par hystérésis du signal filtré.

**14.** Système selon l'une quelconque des revendications 12 à 13 **caractérisé en ce que** ledit moyen de mesure de déphasage ($\varphi$M) est activé dans ladite demi-période prédéterminée.

**15.** Système selon l'une quelconque des revendications 12 à 14 **caractérisé en ce que** ledit moyen de mesure de déphasage ($\varphi$M) est activé par un moyen de détection du changement de signe (D0) de l'intensité (Ie) du circuit primaire (CP) dans ladite demi-période prédéterminée.

**16.** Système selon l'une quelconque des revendications 12 à 15 **caractérisé en ce que** ledit moyen de mesure de déphasage ($\varphi$M) est activé dans une zone de fonctionnement en mode générateur du circuit primaire (CP).

**17.** Système selon l'une quelconque des revendications 12 à 16 **caractérisé en ce que** ledit moyen de mesure de déphasage ($\varphi$M) utilise un moyen de mesure de la durée entre ledit changement de signe (D0) de l'intensité (Ie) et le prochain front montant de commutation de la tension.

**18.** Système selon l'une quelconque des revendications 12 à 17 **caractérisé en ce que** lesdits moyens d'initialisation de la fréquence de commutation des cellules du circuit primaire (K1, K2, K3 et K4) sont aptes à initialiser ladite fréquence à une fréquence supérieure à une fréquence de résonance maximale prédéterminée.

**19.** Système selon l'une quelconque des revendications 12 à 18 **caractérisé en ce que** ledit moyen d'asservissement en fréquence du circuit primaire (CP) comporte un moyen de calcul de la prochaine fréquence de commutation des cellules du circuit primaire (K1, K2, K3 et K4) dont l'entrée est ledit déphasage ($\varphi$M) issu dudit moyen de mesure de déphasage.

**20.** Système selon la revendication précédente **caractérisé en ce que** ledit moyen de calcul de la prochaine fréquence de commutation des cellules du circuit primaire (K1, K2, K3 et K4) comporte un moyen de sommation dont les entrées sont la fréquence courante de commutation des cellules et le résultat d'un multiplicateur d'un gain et d'une fonction sinus appliquée à l'angle dudit déphasage issu dudit moyen de mesure de déphasage ($\varphi$M).

**21.** Système selon l'une quelconque des revendications 12 à 20 **caractérisé en ce que** ledit système comprend un moyen d'arrêt dudit transfert de puissance sur des seuils de fréquence prédéterminés.

**22.** Système selon l'une quelconque des revendications 12 à 20 **caractérisé en ce que** ledit système comprend un moyen d'arrêt dudit transfert de puissance sur des seuils d'intensité prédéterminés.

**Patentansprüche**

1.  Verfahren zur Übertragung von Leistung von einem Primärkreis (CP), der einen Resonanzkreis und einen Wechselrichter (OND) umfasst, zu einem Sekundärkreis (CS), welches zur kontaktlosen Ladung einer Batterie (BAT) eines Kraftfahrzeugs (VEH) bestimmt ist, wobei eine elektrische Leistung durch Induktion zwischen einer Primärspule (BP), die am Boden angeordnet ist, und einer Sekundärspule (BS), die sich an Bord des Fahrzeugs (VEH) befindet und mit der Batterie (BAT) verbunden ist, übertragen wird, wobei das Verfahren Schritte umfasst:

    - (E6) der Steuerung der Schaltzellen (K1, K2, K3 und K4) des Wechselrichters (OND) des Primärkreises (CP), der die Primärspule (BP) mit einem Gleichstromversorgungsbus (BAC) verbindet,
    - (E2) der Messung der Stromstärke in der Primärspule (Ie),
    - (E3) der Filterung eines Signals dieser Stromstärke (Ie),
    - (E4) der Messung der Phasenverschiebung ($\varphi$M) zwischen der Stromstärke (Ie) und der Spannung an den Klemmen des Resonanzkreises des Primärkreises (Ve),
    - (E5) der Frequenznachführung des Primärkreises (CP) unter Verwendung der zuvor gemessenen Phasenverschiebung ($\varphi$M),

    **dadurch gekennzeichnet, dass** das Verfahren außerdem umfasst:

    einen Schritt der Initialisierung (E1) der Frequenz des Primärkreises (CP), der geeignet ist, das Vorzeichen der Phasenverschiebung ($\varphi$M) in Abhängigkeit von der so initialisierten Frequenz auf einer vorbestimmten Halbperiode des Signals der Stromstärke (Ie) zu fixieren, und dadurch, dass die Schritte des Verfahrens in jeder Periode des Signals der Stromstärke (Ie) ausgeführt werden.

2.  Verfahren nach dem vorhergehenden Anspruch, **dadurch gekennzeichnet, dass** der Schritt der Filterung (E3) Schritte umfasst:

    - der analogen Hochfrequenzfilterung,
    - der Detektion der Vorzeichenänderung des gefilterten Signals.

3.  Verfahren nach einem der vorhergehenden Ansprüche, **dadurch gekennzeichnet, dass** die Messung der Phasenverschiebung ($\varphi$M) in der vorbestimmten Halbperiode ausgeführt wird.

4.  Verfahren nach einem der vorhergehenden Ansprüche, **dadurch gekennzeichnet, dass** die Messung der Phasenverschiebung ($\varphi$M) durch eine Vorzeichenänderung (D0) der Stromstärke (Ie) des Primärkreises (CP) in der vorbestimmten Halbperiode ausgelöst wird.

5.  Verfahren nach einem der vorhergehenden Ansprüche, **dadurch gekennzeichnet, dass** der Schritt der Messung der Phasenverschiebung (E4) im Arbeitsbereich des Primärkreises (CP) im Generatormodus ausgeführt wird.

6.  Verfahren nach einem der vorhergehenden Ansprüche, **dadurch gekennzeichnet, dass** die Messung der Phasenverschiebung ($\varphi$M) aus der Messung der Dauer zwischen der Vorzeichenänderung (D0) der Stromstärke (Ie) und der nächsten ansteigenden Schaltflanke der Spannung abgeleitet wird.

7.  Verfahren nach einem der vorhergehenden Ansprüche, **dadurch gekennzeichnet, dass** im Schritt der Initialisierung (E1) eine Schaltfrequenz der Zellen des Primärkreises (K1, K2, K3 und K4) bei einer Frequenz vorgegeben wird, die höher als eine vorbestimmte maximale Resonanzfrequenz ist.

8.  Verfahren nach einem der vorhergehenden Ansprüche, **dadurch gekennzeichnet, dass** der Schritt der Frequenznachführung (E5) des Primärkreises (CP) einen Schritt der Berechnung der nächsten Schaltfrequenz der Zellen des Primärkreises (K1, K2, K3 und K4) in Abhängigkeit von der gemessenen Phasenverschiebung ($\varphi$M) aus dem Schritt der Messung der Phasenverschiebung (E4) umfasst.

9.  Verfahren nach dem vorhergehenden Anspruch, **dadurch gekennzeichnet, dass** der Schritt der Berechnung der nächsten Schaltfrequenz der Zellen des Primärkreises (K1, K2, K3 und K4) die Summe der aktuellen Schaltfrequenz der Zellen und einer mit dem Sinus des Winkels der Phasenverschiebung aus dem Schritt der Messung der Phasenverschiebung (E4) multiplizierten Verstärkung ist.

**10.** Verfahren nach dem vorhergehenden Anspruch, **dadurch gekennzeichnet, dass** die Übertragung von Leistung an vorbestimmten Frequenzschwellenwerten gestoppt wird.

**11.** Verfahren nach einem der Ansprüche 1 bis 9, **dadurch gekennzeichnet, dass** die Übertragung von Leistung an vorbestimmten Schwellenwerten der Stromstärke gestoppt wird.

**12.** System zur Übertragung von Leistung, welches einen Primärkreis (CP) umfasst, wobei der Primärkreis (CP) einen Resonanzkreis und einen Wechselrichter (OND) umfasst, wobei das System geeignet ist, eine elektrische Leistung durch Induktion zwischen einer Primärspule (BP) des Resonanzkreises, die am Boden angeordnet ist, und einer Sekundärspule (BS), die sich an Bord des Fahrzeugs (VEH) befindet und mit einer Batterie (BAT) des Fahrzeugs (VEH) verbunden ist, zu übertragen, wobei das System umfasst:

- Mittel zur Steuerung der Schaltzellen (K1, K2, K3 und K4) des Wechselrichters (OND) des Primärkreises (CP), der die Primärspule (BP) mit einem Gleichstromversorgungsbus (BAC) verbindet,
- Mittel zur Messung der Stromstärke in der Primärspule (Ie),
- Mittel zur Filterung eines Signals dieser Stromstärke (Ie),
- Mittel zur Messung der Phasenverschiebung ($\varphi$M) zwischen der Stromstärke (Ie) und der Spannung an den Klemmen des Resonanzkreises (Ve),
- Mittel zur Frequenznachführung des Primärkreises (CP) unter Verwendung der Phasenverschiebung ($\varphi$M),

die von diesen Mitteln zur Messung gemessen wurde, **dadurch gekennzeichnet, dass** das System außerdem umfasst:

Mittel zur Initialisierung der Frequenz des Primärkreises (CP), die geeignet sind, das Vorzeichen der Phasenverschiebung ($\varphi$M) in Abhängigkeit von der durch die Mittel zur Initialisierung initialisierten Frequenz auf einer vorbestimmten Halbperiode des Signals der Stromstärke (Ie) zu fixieren, und dadurch, dass diese Mittel des Systems in jeder Periode des Signals der Stromstärke (Ie) aktiviert werden.

**13.** System nach dem vorhergehenden Anspruch, **dadurch gekennzeichnet, dass** das Mittel zur Filterung Mittel umfasst:

- zur analogen Hochfrequenzfilterung,
- zum Hysteresevergleich des gefilterten Signals.

**14.** System nach einem der Ansprüche 12 bis 13, **dadurch gekennzeichnet, dass** das Mittel zur Messung der Phasenverschiebung ($\varphi$M) in der vorbestimmten Halbperiode aktiviert wird.

**15.** System nach einem der Ansprüche 12 bis 14, **dadurch gekennzeichnet, dass** das Mittel zur Messung der Phasenverschiebung ($\varphi$M) durch ein Mittel zur Detektion der Vorzeichenänderung (D0) der Stromstärke (Ie) des Primärkreises (CP) in der vorbestimmten Halbperiode aktiviert wird.

**16.** System nach einem der Ansprüche 12 bis 15, **dadurch gekennzeichnet, dass** das Mittel zur Messung der Phasenverschiebung ($\varphi$M) in einem Arbeitsbereich des Primärkreises (CP) im Generatormodus aktiviert wird.

**17.** System nach einem der Ansprüche 12 bis 16, **dadurch gekennzeichnet, dass** das Mittel zur Messung der Phasenverschiebung ($\varphi$M) ein Mittel zur Messung der Dauer zwischen der Vorzeichenänderung (D0) der Stromstärke (Ie) und der nächsten ansteigenden Schaltflanke der Spannung verwendet.

**18.** System nach einem der Ansprüche 12 bis 17, **dadurch gekennzeichnet, dass** die Mittel zur Initialisierung der Schaltfrequenz der Zellen des Primärkreises (K1, K2, K3 und K4) geeignet sind, diese Frequenz mit einer Frequenz zu initialisieren, die höher als eine vorbestimmte maximale Resonanzfrequenz ist.

**19.** System nach einem der Ansprüche 12 bis 18, **dadurch gekennzeichnet, dass** das Mittel zur Frequenznachführung des Primärkreises (CP) ein Mittel zur Berechnung der nächsten Schaltfrequenz der Zellen des Primärkreises (K1, K2, K3 und K4) umfasst, dessen Eingangsgröße die Phasenverschiebung ($\varphi$M) ist, die von dem Mittel zur Messung der Phasenverschiebung stammt.

**20.** System nach dem vorhergehenden Anspruch, **dadurch gekennzeichnet, dass** das Mittel zur Berechnung der nächsten Schaltfrequenz der Zellen des Primärkreises (K1, K2, K3 und K4) ein Mittel zur Summierung umfasst, dessen Eingangsgrößen die aktuelle Schaltfrequenz der Zellen und das Ergebnis eines Multiplikators einer Verstärkung und einer auf den vom Mittel zur Messung der Phasenverschiebung ($\varphi$M) stammenden Winkel der Phasenverschiebung angewendeten Sinusfunktion sind.

21. System nach einem der Ansprüche 12 bis 20, **dadurch gekennzeichnet, dass** das System ein Mittel zum Stoppen der Übertragung von Leistung an vorbestimmten Frequenzschwellenwerten umfasst.

22. System nach einem der Ansprüche 12 bis 20, **dadurch gekennzeichnet, dass** das System ein Mittel zum Stoppen der Übertragung von Leistung an vorbestimmten Schwellenwerten der Stromstärke umfasst.

**Claims**

1. Method for transferring power from a primary circuit (CP) comprising a resonant circuit and an inverter (OND) to a secondary circuit (CS), designed for the contactless charging of a battery (BAT) of an automobile vehicle (VEH), an electrical power being transferred by induction between a primary coil (BP) disposed in the ground and a secondary coil (BS) carried onboard said vehicle (VEH) and connected to said battery (BAT), said method comprising steps for:

   - (E6) controlling the switching cells (K1, K2, K3 and K4) of said inverter (OND) of the primary circuit (CP) connecting the primary coil (BP) to a DC power supply bus (BAC)
   - (E2) measurement of the current in the primary coil (Ie)
   - (E3) filtering of a signal of said current (Ie)
   - (E4) measurement of the phase shift ($\varphi$M) between said current (Ie) and the voltage across the terminals of the resonant circuit of the primary circuit (Ve)
   - (E5) closed-loop frequency control of said primary circuit (CP) using the phase shift previously measured ($\varphi$M)

   **characterized in that** said method furthermore comprises a step (E1) for initialization of said frequency of the primary circuit (CP), designed to fix the sign of said phase shift ($\varphi$M) over a predetermined half-period of the signal of said current (Ie), as a function of said frequency thus initialized, and **in that** said steps of said method are executed at each period of the signal of said current (Ie).

2. Method according to the preceding claim, **characterized in that** said filtering step (E3) comprises steps for:

   - high-frequency analog filtering
   - detection of the change of sign of the filtered signal.

3. Method according to either one of the preceding claims, **characterized in that** said phase-shift measurement ($\varphi$M) is executed within said predetermined half-period.

4. Method according to any one of the preceding claims, **characterized in that** said phase-shift measurement ($\varphi$M) is triggered by a change of sign (D0) of the current (Ie) in the primary circuit (CP) within said predetermined half-period.

5. Method according to any one of the preceding claims, **characterized in that** said phase-shift measurement step (E4) is executed within the region of operation in generator mode of the primary circuit (CP).

6. Method according to any one of the preceding claims, **characterized in that** said measurement of the phase shift ($\varphi$M) comes from the measurement of the time period between said change of sign (D0) of the current (Ie) and the next rising edge of switching of the voltage.

7. Method according to any one of the preceding claims, **characterized in that**, in said initialization step (E1), a switching frequency of the cells of the primary circuit (K1, K2, K3 and K4) is imposed at a frequency higher than a predetermined maximum resonance frequency.

8. Method according to any one of the preceding claims, **characterized in that** said closed-loop frequency control step (E5) for the primary circuit (CP) comprises a step for calculating the next switching frequency of the cells of the primary circuit (K1, K2, K3 and K4) as a function of said measured phase shift ($\varphi$M) coming from said phase-shift measurement step (E4).

9. Method according to the preceding claim, **characterized in that** said step for calculating the next switching frequency of the cells of the primary circuit (K1, K2, K3 and K4) is the sum of the current switching frequency of the cells and of a gain multiplied by the sine of the angle of said phase shift coming from said phase-shift measurement step (E4).

10. Method according to any one of the preceding claims, **characterized in that** said transfer of power is stopped on predetermined frequency thresholds.

11. Method according to any one of Claims 1 to 9, **characterized in that** said transfer of power is stopped on predetermined current thresholds.

12. System for transferring power comprising a primary circuit (CP), said primary circuit (CP) comprising a resonant circuit and an inverter (OND), said system being designed to transfer an electrical power by induction between a primary coil (BP) of the resonant circuit disposed in the ground and a secondary coil (BS) carried onboard a vehicle (VEH) and connected to a battery (BAT) of the vehicle (VEH), said system comprising:

- means of controlling switching cells (K1, K2, K3 and K4) of said inverter (OND) of the primary circuit (CP) connecting the primary coil (BP) to a DC power supply bus (BAC)
- means of measuring the current in the primary coil (Ie)
- means of filtering a signal of said current (Ie)
- means of measuring the phase shift ($\varphi$M) between said current (Ie) and the voltage across the terminals of the resonant circuit (Ve)
- means for closed-loop frequency control of said primary circuit (CP) using the phase shift measured ($\varphi$M) by said measurement means,

**characterized in that** said system furthermore comprises means of initializing said frequency of the primary circuit (CP) designed to fix the sign of said phase shift ($\varphi$M) over a predetermined half-period of the signal of said current (Ie), as a function of said frequency initialized by said initialization means, and **in that** said means of said system are activated at each period of the signal of said current (Ie).

13. System according to the preceding claim, **characterized in that** said filtering means comprises means of:

- high-frequency analog filtering
- comparison by hysteresis of the filtered signal.

14. System according to either one of Claims 12 and 13, **characterized in that** said phase-shift measurement means ($\varphi$M) is activated within said predetermined half-period.

15. System according to any one of Claims 12 to 14, **characterized in that** said phase-shift measurement means ($\varphi$M) is activated by a means for detecting the change of sign (D0) of the current (Ie) in the primary circuit (CP) within said predetermined half-period.

16. System according to any one of Claims 12 to 15, **characterized in that** said phase-shift measurement means ($\varphi$M) is activated in a region of operation in generator mode of the primary circuit (CP).

17. System according to any one of Claims 12 to 16, **characterized in that** said phase-shift measurement means ($\varphi$M) uses a means of measuring the time period between said change of sign (D0) of the current (Ie) and the next rising edge of switching of the voltage.

18. System according to any one of Claims 12 to 17, **characterized in that** said means of initializing the switching frequency of the cells of the primary circuit (K1, K2, K3 and K4) are designed to initialize said frequency at a frequency higher than a predetermined maximum resonance frequency.

19. System according to any one of Claims 12 to 18, **characterized in that** said means for closed-loop frequency control of the primary circuit (CP) comprises a means of calculating the next switching frequency of the cells of the primary circuit (K1, K2, K3 and K4) whose input is said phase shift ($\varphi$M) coming from said phase-shift measurement means.

20. System according to the preceding claim, **characterized in that** said means of calculating the next switching frequency of the cells of the primary circuit (K1, K2, K3 and K4) comprises a summing means whose inputs are the current switching frequency of the cells and the result of a multiplier of a gain and of a sine function applied to the angle of said phase shift coming from said phase-shift measurement means ($\varphi$M) .

21. System according to any one of Claims 12 to 20, **characterized in that** said system comprises a means of stopping said transfer of power on predetermined frequency thresholds.

22. System according to any one of Claims 12 to 20, **characterized in that** said system comprises a means of stopping said transfer of power on predetermined current thresholds.

## FIG. 1

## FIG. 2

## FIG. 3

```
┌─────────────────┐
│  initialisation │ ⌇ E1
└─────────────────┘
         │
         ▼
┌─────────────────┐
│   Mesure de Ie  │ ⌇ E2
└─────────────────┘
         │
         ▼
┌─────────────────┐
│   Filtrage et   │
│  détection de   │
│  changement     │ ⌇ E3
│   de signe      │
└─────────────────┘
         │
         ▼
┌─────────────────┐
│   mesure du     │
│   déphasage     │ ⌇ E4
└─────────────────┘
         │
         ▼
┌─────────────────┐
│ asservissement  │
│  en fréquence   │ ⌇ E5
└─────────────────┘
         │
         ▼
┌─────────────────┐
│ pilotage des    │
│ cellules de     │ ⌇ E6
│ commutation     │
└─────────────────┘
```

# FIG. 4

# FIG. 5

## FIG. 6

Fréquence (Hz)

## FIG. 7

Fréquence (kHz)

**EP 3 374 228 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2988234 B1

- FR 2998427 B1